# EUROPEAN PATENT APPLICATION

(11) **EP 2 660 149 A2**
(43) Date of publication of application: **06.11.2013**
(21) Application number: 13166333.8
(22) Date of filing: 02.05.2013
(51) Int. Cl.: B64C 23/00

(54) **Dielectric barrier discharge flight control system through modulated boundary layer transition**

(30) Priority: 02.05.2012 US 201213462170
(71) Applicant: The Boeing Company, Chicago, IL 60606-2016 (US)
(72) Inventor: Osborne, Bradley A., Chesterfield, MO Missouri 63017 (US); Schwimley, Scott L., Foristell, MO Missouri 63348 (US); Silkey, Joseph S., Florissant, MO Missouri 63031 (US)
(74) Representative: Howson, Richard G.B.

(57) **Abstract**

An aerodynamic control system incorporates multiple Dielectric Barrier Discharge (DBD) flow control actuators (36) adjacent a surface (24, 28) of an airborne vehicle (10) in a path of laminar boundary layer flow over the surface (22, 26). A control computer (86) receives a control input (87) and selectively distributes power to an activation array (88, 90) selected from the DBD flow control actuators for transition to a first operating condition tripping the laminar boundary layer at selected streamwise locations for turbulent flow. When the control computer removes the distributed power the DBD flow control actuators return to a second operating condition restoring the laminar boundary layer.

## Description

### BACKGROUND INFORMATION

### Field

Embodiments of the disclosure relate generally to the field aircraft aerodynamic control and more particularly to altering lift on an aerodynamic surface using dielectric barrier discharge electrodes to modulate the position of boundary layer transition from laminar to turbulent flow.

### Background

Modern aircraft employ various systems for aerodynamic control. Existing solutions are typically conventional flaps, ailerons, and other moving control surfaces. These are mechanical devices that move to affect aerodynamic flow and control flight. Over long flight durations (days, months or years) and in extreme environmental conditions (high altitude, low pressure, cold temperature, etc.) these devices may be subject to maintenance issues, interrupting the performance of a mission or operability of the aircraft. Additionally, hinges, bearings and actuators are required, which occupy significant distributed volume. Implementation of these devices on a highly flexible structures such as very high aspect ratio wings can have unique design challenges and constraints. It is typically difficult to implement spanwise control actuation with large segmentation using mechanical systems.

It is therefore desirable to provide a control system which is efficient, no-maintenance, robust, reliable, high-bandwidth, lower weight, solid-state and distributed for flight control of aircraft.

### SUMMARY

Embodiments disclosed herein provide an aerodynamic control system incorporating multiple Dielectric Barrier Discharge (DBD) flow control actuators adjacent a surface of an airborne vehicle in a path of laminar boundary layer flow over the surface. A control computer receives a control input and selectively distributes power to an activation array selected from the DBD flow control actuators for transition to a first operating condition tripping the laminar boundary layer at selected streamwise locations for turbulent flow. When the control computer removes the distributed power the DBD flow control actuators return to a second operating condition restoring the laminar boundary layer.

The embodiments allow a method of providing aerodynamic control by disposing multiple Dielectric Barrier Discharge (DBD) flow control actuators adjacent a surface of an airborne vehicle in a path of laminar boundary layer flow over the surface. The DBD flow control actuators are then controlled to assume a first operating configuration in which the boundary layer flow selectively transitions to a turbulent flow at a streamwise location on the airfoil. The DBD flow control actuators are then controlled to assume a second operating configuration in which said turbulent flow selectively returns to a laminar flow.

The invention involves a method of providing aerodynamic control, comprising disposing a plurality of Dielectric Barrier Discharge (DBD) flow control actuators adjacent an airfoil surface of an airborne vehicle in a path of laminar boundary layer flow over said surface, controlling said DBD flow control actuators to assume a first operating configuration in which said boundary layer flow selectively transitions to a turbulent flow at a streamwise location on the airfoil and controlling said DBD flow control actuators to assume a second operating configuration in which said turbulent flow selectively returns to a laminar flow. The DBD flow control actuators may be aerodynamically smooth to avoid passive tripping of the laminar flow. In addition, a plurality of DBD flow control actuators may be disposed by placing DBD flow control actuators in a streamwise array on the surface. The surface may be a wing and the streamwise array of DBD flow control actuators can be located on both an upper and lower surface of the wing in order to enhance performance.

The surface may be an element of a wing, a vertical stabilizer or a horizontal stabilizer and disposing a plurality of DBD flow control actuators can include placing DBD actuators in spanwise zones proximate a leading edge on the surface.

The method of controlling said DBD flow control actuators in order to assume a first operating condition may include selecting an activation array from the plurality of DBD flow control actuators based on streamwise position for desired control authority. Controlling said DBD flow control actuators to assume a first operating condition may also include selecting an activation array from the plurality of DBD flow control actuators based on upper or lower surface location for desired control authority. In addition it may involve selecting an activation array from the plurality of DBD actuators based on spanwise position for desired control authority.

The invention involves an aerodynamic control system comprising a plurality of Dielectric Barrier Discharge (DBD) flow control actuators adjacent a surface of an airborne vehicle in a path of laminar boundary layer flow over said surface, a control computer receiving a control input and selectively distributing power to an activation array in the plurality of DBD flow control actuators for transition to a first operating condition tripping the laminar boundary layer at selected streamwise locations for turbulent flow, said control computer removing said distributing power to return the DBD flow control actuators to a second operating condition restoring the laminar boundary layer. The aerodynamic control system may include DBD flow control actuators that are aerodynamically smooth to avoid passive tripping of the laminar flow. The aerodynamic control system may include DBD flow control actuators that comprise a multilayer structure having a plurality of layers of polyimide film with an outer electrode of etched copper foil on an outside surface of an outer polyimide film layer and an inner electrode of etched copper foil on an inside surface of an inner polyimide film layer. The aerodynamic control system may include DBD flow control actuators with a multilayer structure that includes adhesive layers joining the plurality of polyimide film layers. The plurality of DBD flow control actuators may be placed in a streamwise array on the surface. The aerodynamic control system surface can be a wing and the streamwise array of DBD flow control actuators can be located on both an upper and lower surface of the wing. The aerodynamic control system surface can be either a wing, a vertical stabilizer and/or a horizontal stabilizer and the plurality of DBD flow control actuators may be placed in spanwise zones on the wing. The aerodynamic control can include an activation array for the first operating condition that is is selected from the plurality of DBD flow control actuators based on streamwise position for desired control authority. The aerodynamic control system activation array for the first operating condition may be selected from the plurality of DBD flow control actuators based on spanwise position for desired control authority. The aerodynamic control system activation array for the first operating condition may be selected from the plurality of DBD flow control actuators based on position on the upper or lower surface for desired control authority. The aerodynamic control system may include at least one DBD flow control actuators that trips the boundary layer for turbulent flow immediately downstream of a stagnation point on the wing.

The control system for aerodynamic control may include a plurality of aerodynamically smooth Dielectric Barrier Discharge (DBD) flow control actuators placed in a streamwise array adjacent an upper surface and a lower surface of each wing on an airborne vehicle in a path of laminar boundary layer flow over said upper and lower surface of each wing, said plurality of aerodynamically smooth Dielectric Barrier Discharge (DBD) flow control actuators further placed in spanwise zones on each wing, a control computer receiving a control input and selectively distributing power to an activation array in the plurality of DBD flow control actuators for transition to a first operating condition tripping the laminar boundary layer at selected streamwise and spanwise locations for turbulent flow to selectively induce roll, pitch and yaw, said control computer removing said distributing power to return the DBD flow control actuators to a second operating condition restoring the laminar boundary layer.

The features, functions, and advantages that have been discussed can be achieved independently in various embodiments of the present disclosure or may be combined in yet other embodiments further details of which can be seen with reference to the following description and drawings. Each feature and function provides for an enhancement in efficiency and performance of the invention.

### BRIEF DESCRIPTION OF THE DRAWINGS

FIG. 1 is a perspective view of a generic aircraft on which the embodiments described herein may be applied;
FIG. 2 is a side section view of a wing chord showing stream lines and laminar/turbulent flow transition;
FIG. 3 is a side section view of the wing chord as shown in FIG. 2 showing flow tripping with a Dielectric Barrier Discharge actuator;
FIG. 4 is a side section view of a wing chord employing an array of DBD actuators;
FIG. 5 is a detailed section view of an example DBD actuator implementation on the leading edge of the wing;
FIG. 6A is a perspective exploded view of a laminated DBD actuator;
FIG. 6B is a side section view of the laminated DBD actuator of FIG. 6A;
FIG. 7 is a top view of an aircraft showing spanwise placement of DBD actuator elements in the array;
FIG. 8 is a block diagram of a control system for the DBD actuator array; and,
FIG. 9 is a flow diagram of a method for aircraft control employing a DBD actuator array of the present embodiment.

### DETAILED DESCRIPTION

Embodiments disclosed herein provide a Dielectric Barrier Discharge (DBD) actuator array to force boundary layer transition from laminar to turbulent on a flight surface (wing, horizontal stabilizer or vertical stabilizer) of an aircraft or other airborne vehicle at selected locations. This aerodynamic boundary layer change alters the pressure distribution over the surface causing an unbalanced force and moment perturbation, for example between the port and starboard wing or surface to effect flight control. The disclosed embodiments use electric power to directly affect the air in the flow stream adjacent the surface, bypassing usual mechanical intermediaries employed for control surfaces on conventional aircraft. The actuators in the described embodiments are solid-state (no moving parts) reducing durability issues typical of mechanical systems and making a potentially a more robust/reliable system which can be very low-cost. The actuators operate at frequencies in a range of 1KHz to 10KHz, much higher than mechanical systems, allowing full control authority as soon as the need is sensed without the lag typical of mechanical systems. Structural arrangement of individual actuators is very simple, consisting of two thin electrodes separated by a dielectric material. The actuator is compatible with sustained laminar flows when not powered. The simplicity of the actuator allows selective actuation in very small spatial elements, providing a high degree of control specificity along a flight surface. This enables a much higher degree of control tailoring for aeroelastic, gust or other purposes at a reasonable cost. Implementation of the embodiments would not compromise the operation of conventional control surfaces nearby, so it can be used to augment existing control, even when conventional flap-type elements already occupying the same section of flight surface.

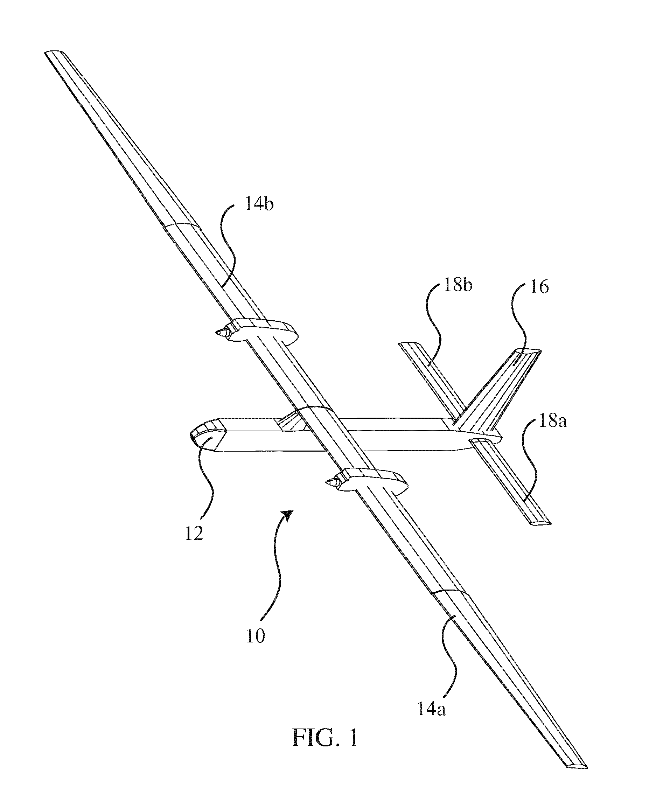

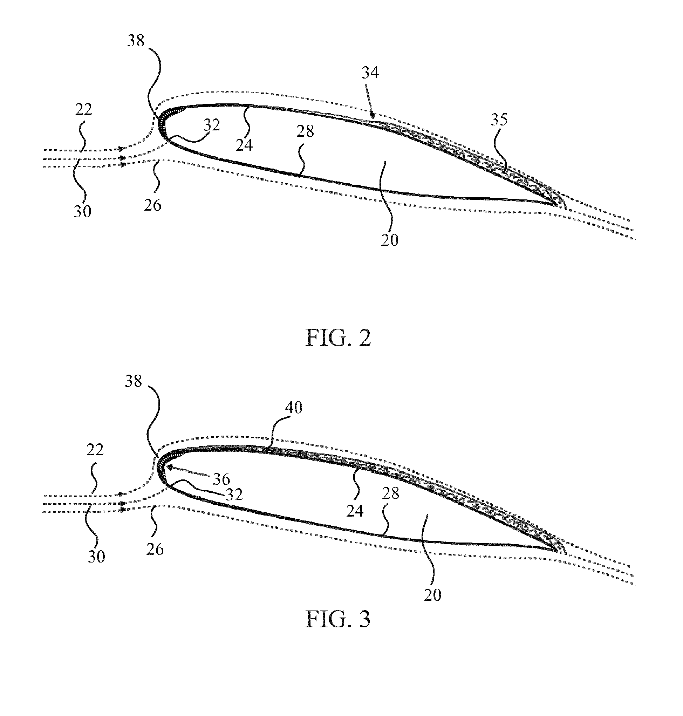

Referring to the drawings, FIG. 1 shows the general geometry of an aircraft 10 as an airborne vehicle on which the embodiments described could be implemented. Aircraft 10 has a fuselage 12, left and right wings 14a and 14b, vertical stabilizer 16 and left and right horizontal stabilizers 18a and 18b. The wings 14a and 14b employ airfoil shapes as shown in FIGs. 2 and 3 which produce laminar flow under nominal flight conditions. As shown in FIG. 2, the free stream flows around the airfoil 20 as represented by stream line 22 over the upper or suction surface 24 and stream line 26 under the lower or pressure surface 28. Stagnation stream line 3 0 impinges the airfoil at the stagnation point 32. In FIG. 2, in a normal operating condition a laminar to turbulent transition point 34 is present (nominally aft of the mid chord) with subsequent turbulent flow represented by element 35. A DBD actuator 36 is integrated into the leading edge 38 of the airfoil as shown in FIG. 3. Upon activation of the DBD actuator, the laminar flow is "tripped" resulting in turbulent flow (represented by element 40 in FIG. 3) being initiated at or near the leading edge 38 thereby decreasing lift and increasing drag on the airfoil. Upon deactivation of the DBD actuator 36, laminar flow is reestablished returning to the flow state shown in FIG. 2.

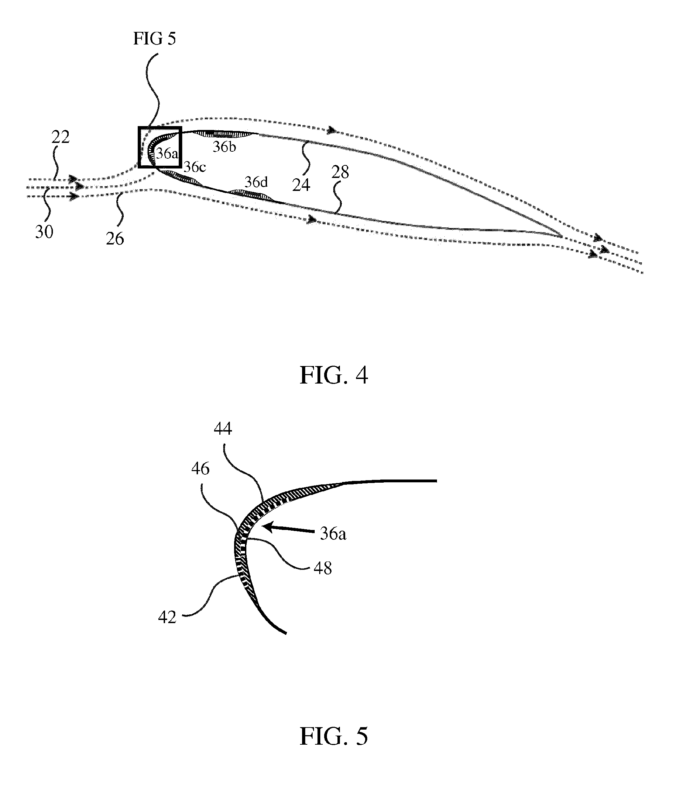

DBD actuators may be arranged in streamwise array as shown in FIG. 4 such that successive DBD actuators 36b (on the upper or suction surface) and 36c and 36d (on the lower or pressure surface) are located downstream of initial DBD actuator 36a to maintain transition (in the event of relaminarization) or to independently trip a reduced extent of flow for reduced control authority. The two actuators illustrated in FIG. 4 on each of the suction and pressure surfaces control transition on both the upper and lower sides of the wing section.

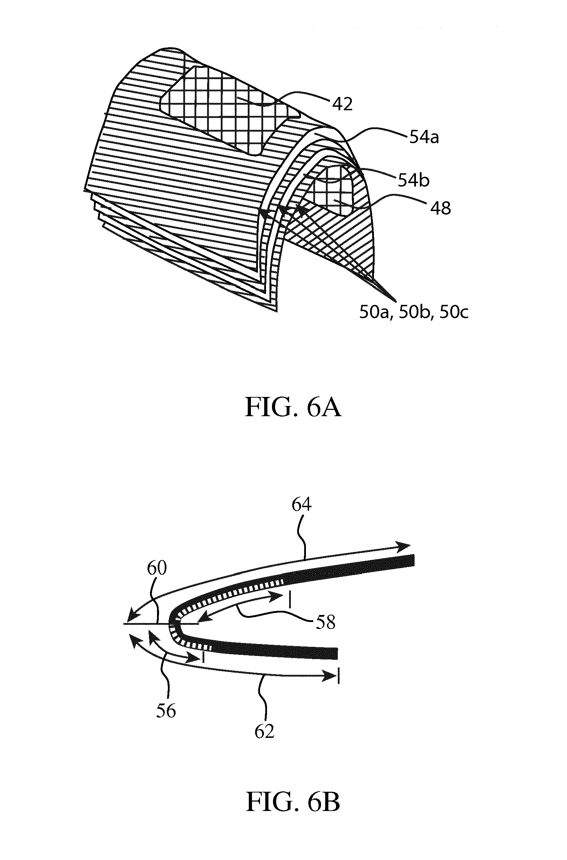

Details of the DBD actuators are shown in FIG. 5. Using the nose DBD actuator 36a as an example, an outer electrode 42 is substantially flush with the aerodynamic surface 44 of the wing. The surface electrode must be substantially aerodynamically flush with the aircraft skin (i.e. does not passively trip the laminar flow). For actuators downstream in the array the smoothness of the actuator with respect to the airfoil surface may be relaxed and the dimension of any exposed portion of the actuator may be allowed to grow as boundary layer thickness grows along airfoil. A dielectric layer 46 separates the outer electrode 42 from an inner electrode 48. As shown in FIG. 6A, the DBD actuators for an example embodiment employ three layers of polyimide film 50a, 50b and 50c joined with pressure sensitive adhesive layers 54a, 54b. Outer electrode 42 is an etched copper foil on film layer 50a while the inner electrode 48 is an etched copper foil on the inside surface of film layer 50c. Spanwise length of the electrodes in FIG. 6A has been shortened for clarity. For the example embodiment, the polyimide film layers are 5.0 mil thickness with the adhesive layers being 2.0 mil VHB (Very High Bond available from 3M). The etched copper electrodes are 0.3 mil in thickness. Example fabrication techniques for the DBD actuators may be as disclosed in US patent application serial no. 12/762,562 filed on 19 April 2010 entitled Laminated Plasma Actuator (attorney docket no. 10-0041) the disclosure of which is incorporated herein by reference. As shown in FIG 6B example dimensions for the DBD actuator laminates of FIG. 6A are an outer electrode length 56 of approximately 0.5 inches and an inner electrode length 58 of approximately 1.5 inches. For the embodiment shown, the dielectric layers extend along the wing surface from the chord centerline 60 for a distance 62 of approximately 1.8 inches and a distance 64 of 3.5 inches.

An alternative embodiment integrates actuators into the composite skin of the wing exploiting the skin material as the dielectric as opposed to creating drop-in actuators as illustrated. To achieve a "smooth" electrode, to avoid tripping the laminar boundary layer until the DBD actuator is activated, structural composites with robotically applied nickel-based electrodes for environmental compatibility may be employed. Additionally, the surface (outer) and encapsulated (inner) electrode arrangement is not critical to effectiveness and the encapsulated electrode may be "upstream" of surface electrode.

The upper or suction surface actuation accomplishes the majority of the control effect and is therefore most effective. The upper surface boundary layer is tripped downstream of stagnation point but DBD actuator control authority to trip the boundary layer is most effective as the actuator is moved toward the leading edge stagnation point. The stagnation point location may vary with respect to airspeed and angle of attack. However, ideally the actuator is placed at the stagnation point as shown in FIG. 3 for actuator 36 and FIG. 4 for actuator 36a.

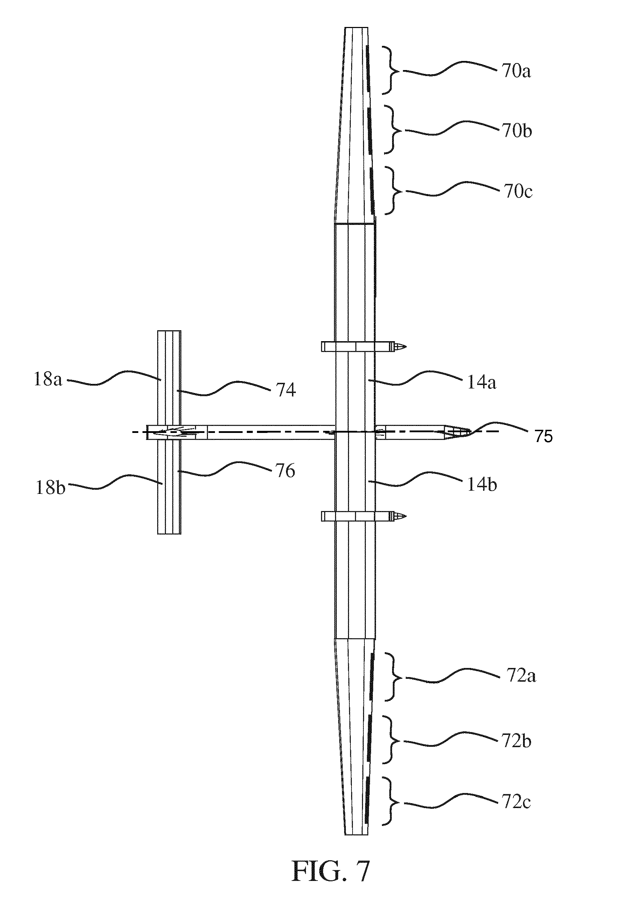

In addition to placement of DBD actuators in the array along the flow direction to achieve a proportional control effects discussed with respect to FIG. 4, as shown in FIG. 7 control can be segmented into discretely addressable DBD arrays located on the wings 14a and 14b in spanwise zones 70a, 70b, 70c and 72a, 72b, 72c respectively. In an example aircraft, DBD actuator zones with a spanwise length of approximately 25% of total wing half span are located on the outer 75% of the span [unclear]. The actuation effectiveness for roll is proportional to the distance of the actuated span from the vehicle axis 75. Zoned array elements can be actuated in isolation or in combination with other spanwise array elements to vary the roll control effectiveness. While shown as equal in span in FIG. 7, an example implementation is to make the spanwise extent of the zones proportional to the product of spanwise displacement from the vehicle centerline and zoned wing plan area to create uniform roll control effectiveness in each zone. Control zones on both left and right wings to enable roll effectiveness in right-wing-up and right-wing-down senses.

As also shown in FIG. 7, for laminar flow airfoils employed on horizontal stabilizers 18a and 18b, DBD actuator arrays 74 and 76 may be added for pitch control. Asymmetrical actuation of arrays 74 and 76 may also assist in roll and yaw control. Similar arrangement of DBD actuator arrays on the vertical stabilizer may also be employed for yaw control.

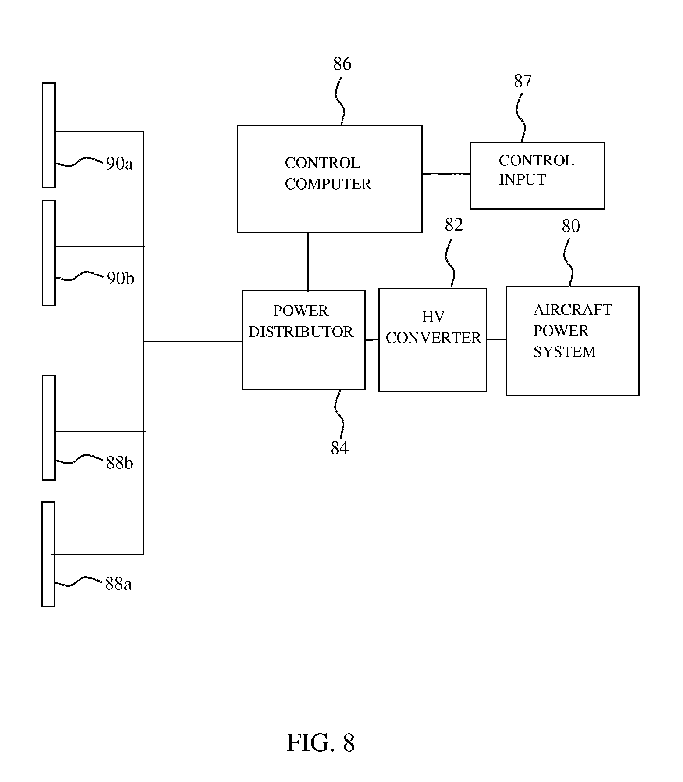

Control of the DBD actuator arrays is accomplished as shown in FIG. 8. The aircraft power system 80 provides basic electrical power for the actuators. A high voltage converter 82 provides the high voltage/high frequency power required by the DBD acutators and a power distributor 84 under control of a control computer 86 distributes the power to the individual actuators (shown as spanwise arrays 88a, 88b on the left wing and 90a and 90b on the right wing. In exemplary embodiments frequencies of 1 - 10 kHz are anticipated. As previously discussed, these arrays may be individual actuators such as DBD actuator 3 6 of FIG. 3 or streamwise distributed actuator arrays of DBD actuators 36a, 36b, 36c and 36d as shown in FIG. 4. The control computer 86 receives a control input 87 from an operator and determines the required control authority to execute that control input, providing power to a selected activation array that may include either or both spanwise elements or streamwise elements (with potential additional selection of upper (suction) or lower (pressure) surface elements) as necessary from a first unpowered operating configuration to a second powered operating configuration to achieve and maintain the calculated control authority by tripping the laminar boundary layer over a desired portion of the wing or other aerodynamic surface.

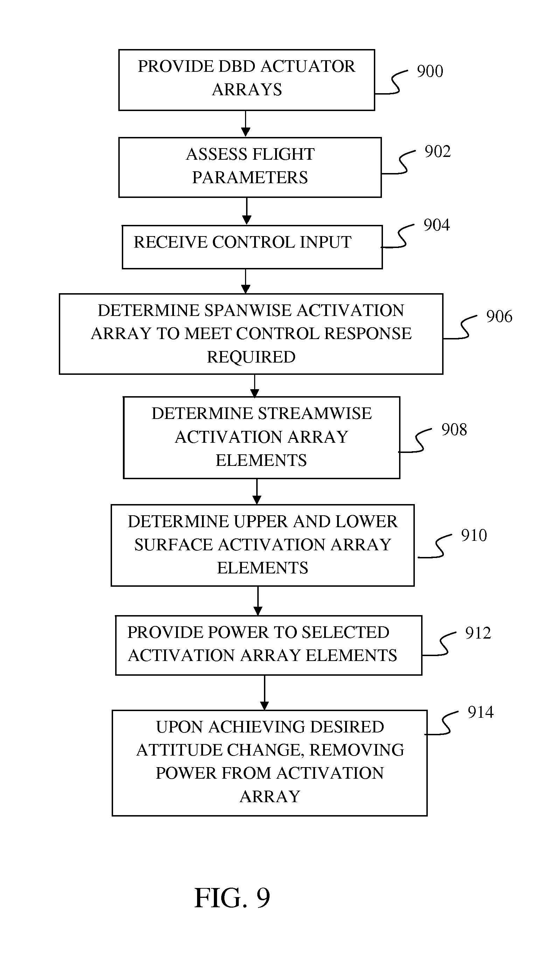

Operation of the system is shown in FIG. 9. For an aircraft with DBD actuators provided on wings or other control surfaces in arrays with upper and lower surface streamwise disbursement and grouped in spanwise zones, step 900, the control computer assess flight parameters such as altitude, airspeed and attitude, step 902. Upon receiving a control input from an operator, step 904, the control computer determines an activation array of DBD actuators which may be selection of one or more spanwise zones of actuators, step 906, for energizing to meet the control response requirement. Additionally or alternatively, within selected spanwise zones, the activation array may include streamwise DBD actuators for enhanced or reduced control authority or to maintain laminar separation and turbulence in the stream, step 908. Also additionally or alternatively, within selected spanwise zones, the activation array may include upper (suction) surface DBD actuators or lower (pressure surface) actuators, step 910. The activation array selection process by the control computer may be a table look up [?] based on flight parameters and control input or may be a calculated result based on predetermined flight control laws for the aircraft. The control computer then provides power to the selected activation array, step 912. Upon achieving the desired aircraft attitude change (or other control response), the control computer removes power from the activation array, step 914, allowing resumption of laminar flow on the aerodynamic surface. The control input resulting from the activation array is substantially immediate allowing very precise control timing and modulation of the DBD actuators in the selected activation array allows very precise control application. As previously noted, disbursement of the DBD actuators both spanwise and streamwise allows very precise control not only for flight control in roll, yaw or pitch but for gust load alleviation and dynamic aeroelastic control of flexible high aspect ratio wings. A surface, flush-mounted shear stress sensor could be employed downstream of the actuators to detect and monitor boundary layer state for actuator feedback control, performance & health monitoring.

Having now described various embodiments of the disclosure in detail as required by the patent statutes, those skilled in the art will recognize modifications and substitutions to the specific embodiments disclosed herein. Such modifications are within the scope and intent of the present disclosure as defined in the following claims.

## Claims

1. A method of providing aerodynamic control, comprising;
disposing a plurality of Dielectric Barrier Discharge (DBD) flow control actuators adjacent an airfoil surface of an airborne vehicle in a path of laminar boundary layer flow over said surface;
controlling said DBD flow control actuators to assume a first operating configuration in which said boundary layer flow selectively transitions to a turbulent flow at a streamwise location on the airfoil;
controlling said DBD flow control actuators to assume a second operating configuration in which said turbulent flow selectively returns to a laminar flow.

2. The method of claim 1 wherein the DBD flow control actuators are aerodynamically smooth to avoid passive tripping of the laminar flow.

3. The method of claim 1 wherein disposing a plurality of DBD flow control actuators comprises placing DBD flow control actuators in a streamwise array on the surface.

4. The method of claim 1 wherein the surface is selected from the set of a wing, a vertical stabilizer and a horizontal stabilizer and disposing a plurality of DBD flow control actuators comprises placing DBD actuators in spanwise zones proximate a leading edge on the surface.

5. The method of claim 3 wherein controlling said DBD flow control actuators to assume a first operating condition further comprises selecting an activation array from the plurality of DBD flow control actuators based on streamwise position for desired control authority.

6. An aerodynamic control system comprising:
a plurality of Dielectric Barrier Discharge (DBD) flow control actuators adjacent a surface of an airborne vehicle in a path of laminar boundary layer flow over said surface;
a control computer receiving a control input and selectively distributing power to an activation array in the plurality of DBD flow control actuators for transition to a first operating condition tripping the laminar boundary layer at selected streamwise locations for turbulent flow;
said control computer removing said distributing power to return the DBD flow control actuators to a second operating condition restoring the laminar boundary layer.

7. The aerodynamic control system as defined in claim 7 wherein DBD flow control actuators are aerodynamically smooth to avoid passive tripping of the laminar flow.

8. The aerodynamic control system as defined in claim 8 wherein the DBD flow control actuators comprise a multilayer structure having a plurality of layers of polyimide film with an outer electrode of etched copper foil on an outside surface of an outer polyimide film layer and an inner electrode of etched copper foil on an inside surface of an inner polyimide film layer.

9. The aerodynamic control system as defined in claim 7 wherein the plurality of DBD flow control actuators are placed in a streamwise array on the surface.

10. The aerodynamic control system as defined in claim 7 wherein the surface is selected from the set of a wing, a vertical stabilizer and a horizontal stabilizer and the plurality of DBD flow control actuators are placed in spanwise zones on the wing..

11. The aerodynamic control system as defined in claim 10 wherein the activation array for the first operating condition is selected from the plurality of DBD flow control actuators based on streamwise position for desired control authority.

12. The aerodynamic control system as defined in claim 10 wherein the activation array for the first operating condition is selected from the plurality of DBD flow control actuators based on position on the upper or lower surface for desired control authority.

13. The aerodynamic control system as defined in claim 10 wherein at least one of the plurality of DBD flow control actuators in the first operating condition trips the boundary layer for turbulent flow immediately downstream of a stagnation point on the wing.

14. A control system for aerodynamic control comprising:
a plurality of aerodynamically smooth Dielectric Barrier Discharge (DBD) flow control actuators placed in a streamwise array adjacent an upper surface and a lower surface of each wing on an airborne vehicle in a path of laminar boundary layer flow over said upper and lower surface of each wing, said plurality of aerodynamically smooth Dielectric Barrier Discharge (DBD) flow control actuators further placed in spanwise zones on each wing;
a control computer receiving a control input and selectively distributing power to an activation array in the plurality of DBD flow control actuators for transition to a first operating condition tripping the laminar boundary layer at selected streamwise and spanwise locations for turbulent flow to selectively induce roll, pitch and yaw;
said control computer removing said distributing power to return the DBD flow control actuators to a second operating condition restoring the laminar boundary layer.
